# EUROPÄISCHE PATENTSCHRIFT

(11) **EP 1 277 002 B1**
(45) Veröffentlichungstag und Bekanntmachung des Hinweises auf die Patenterteilung: **08.10.2003**
(21) Anmeldenummer: 01925554.6
(22) Anmeldetag: 17.04.2001
(51) Int. Cl.: F16H 55/17, F16H 7/02

(54) **ZAHNRIEMENRAD MIT BORD**
TOOTHED BELT WHEEL WITH A COLLAR
POULIE DENTEE A BORDURE

(30) Priorität: 20.04.2000 DE 10019595
(43) Veröffentlichungstag der Anmeldung: 22.01.2003
(73) Patentinhaber: Giesecke & Devrient GmbH, 81677 München (DE)
(72) Erfinder: LINCK, Ralf, 81375 München (DE); WAGNER, Alois, 82140 Olching (DE); BECK, Norbert, 85467 Neuching (DE); SPERL, Markus, 81379 München (DE)
(74) Vertreter: Klunker . Schmitt-Nilson . Hirsch
(86) Internationale Anmeldenummer: EP0104351
(87) Internationale Veröffentlichungsnummer: WO01081794

(56) Entgegenhaltungen:
- FR-A- 2 520 466
- US-A- 3 918 515

## Beschreibung

Die Erfindung betrifft ein Zahnriemenrad mit mindestens einem Bord, wobei das Zahnriemenrad eine verzahnte Umfangsfläche für den Eingriff eines oder mehrerer Zahnriemen aufweist. Die Erfindung betrifft des weiteren ein Zahnriemenradsystem mit mehreren solcher Zahnriemenräder.

Zahnriemenradsysteme werden in Maschinen eingesetzt, um mehrere voneinander beabstandete Achsen mittels Zahnriemen zu koppeln, so daß ein einzelner Motor ausreicht, um alle miteinander gekoppelten Achsen anzutreiben. Der Antrieb von mehr als zwei Achsen kann mittels einem einzigen Zahnriemen gewährleistet werden, indem dieser Zahnriemen über eine entsprechende Anzahl von Zahnriemenräder geführt wird. Es kann aber auch je Achsenpaar ein separater Zahnriemen vorgesehen sein (Kaskadenanordnung).

Der Bord, mit dem insbesondere ein seitliches Abrutschen des Zahnriemens vom Zahnriemenrad während des Betriebs verhindert werden soll, wird üblicherweise durch eine Bordscheibe gebildet, die an einer oder beiden Stirnseiten des Zahnriemenrads angeordnet wird. Aus den gattungsgemäßen US 3,918,515 und FR 2 520 466 A ist es auch bekannt, die Bordscheiben aus einzelnen Segmenten zu bilden, wobei die Segmente über den gesamten Umfang des Zahnriemenrads verteilt sind.

Das Vorhandensein der Bordscheiben stellt jedoch bei der Montage und Auswechslung von Zahnriemen ein Problem dar. Da der montierte Zahnriemen eine zumindest geringe Vorspannung benötigt, um im Betrieb auch bei hohen Lasten und hohen Drehzahlen einen sicheren Eingriff mit dem Zahnriemenrad zu gewährleisten. Ein leichtes Auflegen des Zahnriemens auf vormontierte Zahnriemenräder über die Bordscheiben ist nicht ohne weiteres möglich. Dieses Problem kann umgangen werden, indem die Bordscheibe erst nach dem Auflegen des Zahnriemens auf das Zahnriemenrad montiert wird oder indem das Zahnriemenrad erst nach dem Auflegen des Zahnriemens in die Betriebsposition verschwenkt und verriegelt wird oder aber indem ein Zahnriemen mit Überlänge verwendet und erst nach seiner Montage mittels einer separaten Spannrolle vorgespannt wird. Diese Lösungen sind jedoch mit einem erheblichen konstruktiven Aufwand verbunden.

Insbesondere bei komplexeren Maschinen, wie Banknotenbearbeitungsmaschinen, bei denen zahlreiche Achsen über mehrere Zahnriemen kaskadenartig miteinander gekoppelt sind, werden der konstruktive Aufwand der Maschine sowie der Wartungsaufwand beim Zahnriemenwechsel außerordentlich groß.

Aufgabe der vorliegenden Erfindung ist es daher, ein Zahnriemenrad und ein Zahnriemenradsystem vorzuschlagen, bei denen sowohl eine einfache Montage des Zahnriemens ermöglicht als auch ein Abrutschen des Zahnriemens während des Betriebs zuverlässig verhindert wird.

Diese Aufgabe wird erfindungsgemäß mittels einem Zahnriemenrad sowie einem Zahnriemenradsystem gemäß den unabhängigen Ansprüchen gelöst.

In davon abhängigen Ansprüchen sind bevorzugte Ausführungsformen der Erfindung angegeben.

Zur Lösung der Aufgabe wird vorgeschlagen, den Bord, der das Abrutschen des Zahnriemens im Betrieb verhindern soll, als Bordsegment lediglich über einen begrenzten Teil des Zahnriemenradumfangs auszubilden. Wenn dann die Zahnriemenräder zweier miteinander zu koppelnder Achsen so zueinander gedreht werden, daß die jeweiligen, über den Zahnriemenradumfang herausragenden Bordsegmente einander zugewandt sind, kann der Zahnriemen über die Bordsegmente auf die beiden Zahnriemenräder geschoben werden, ohne mit den Bordsegmenten zu kollidieren.

Das setzt voraus, daß die Bordsegmentlängen in Umfangsrichtung der Zahnriemenräder so gewählt sind, daß die Bordsegmente beim Aufschieben des Zahnriemens vollständig im Innenbereich des Zahnriemens, d.h. zwischen Last- und Leertrum, liegen. Bei einem gegebenen Umschlingungswinkel α eines Zahnriemens um ein Zahnriemenrad kann sich das Bordsegment in Umfangsrichtung des Zahnriemenrads über einen Freiwinkel von 360° - α erstrecken, ohne daß es beim Aufschieben des Zahnriemens zur Kollision kommt. Dabei ist allerdings zu beachten, daß die örtliche radiale Höhe des Bordsegments an den tangentialen Verlauf des Zahnriemens angepaßt ist. Im Falle von gleich großen, miteinander zu koppelnden Zahnriemenrädern, beispielsweise im Zusammenhang mit dem Antrieb von Rollenbahnen, sollten sich die Bordsegmente daher über geringfügig weniger als 180° um den Zahnriemenradumfang erstrecken. Sind dagegen die Durchmesser zweier miteinander zu koppelnder Zahnriemenräder unterschiedlich (Übersetzung bzw. Untersetzung), so erstreckt sich das Bordsegment des größeren Zahnriemenrads um einen geringeren Umfangswinkel (beispielsweise 140°)als das Bordsegment des kleineren Zahnriemenrads (beispielsweise 220°).

Die Erfindung bietet somit den wesentlichen Vorteil, daß alle Zahnriemenräder vormontiert sein können und bleiben können, wenn der oder die Zahnriemen montiert oder im Zuge der Wartung ausgetauscht werden.

Im Falle komplexerer Maschinen mit einer größeren Anzahl von über einen einzigen Motor angetriebenen und kaskadenartig miteinander verbundenen Achsen, bei denen also jeweils zwei Achsen mittels einem separaten Zahnriemen gekoppelt sind, erfolgt die Montage der Zahnriemen in einfacher Weise dadurch, daß jeweils die Bordsegmente von zwei Zahnriemenrädern durch Verdrehen der zugehörigen Achsen in einander gegenüberliegende Positionen gebracht werden und der Zahnriemen an den Bordsegmenten vorbei auf die Zahnriemenräder geschoben wird. Auf diese Weise kann nach und nach die vollständige Zahnriemenkaskade montiert werden.

Im Falle einer Zahnriemenkaskade laufen auf den mittleren Achsen der Kaskade jeweils mindestens zwei Zahnriemen. Für diese Fälle ist es vorteilhaft, wenn drei Bordsegmente vorgesehen sind, ein Bordsegment zwischen zwei Zahnriemen und jeweils ein Bordsegment seitlich der Zahnriemen, die in Umfangsrichtung um 120° zueinander versetzt sind. Ein in zuvor beschriebener Weise auf die Zahnriemenräder aufgeschobener Zahnriemen kann dann am mittleren Bordsegment vorbei in die hintere Position, das heißt auf das hintere Zahnriemenrad, weiter geschoben werden, wenn die zugehörige Achse um 120° verdreht wird.

Auf einer Achse können auch mehr als zwei Zahnriemen laufen, wobei eine entsprechend größere Anzahl von Bordsegmenten vorzusehen ist, die über den Umfang gleichmäßig verteilt sind. Im Falle von n Zahnriemen werden vorzugsweise n Bordscheiben (einseitig begrenzende Bordscheibe) oder n + 1 Bordscheiben (beidseitig begrenzende Bordscheiben) angebracht, die in Umfangsrichtung um 360°/n bzw. 360°/(n + 1) zueinander versetzt sind.

Die Erfindung ist ebenso einsetzbar in Zahnriemenradsystemen, in welchen ein Zahnriemen über mehr als zwei Zahnriemenräder geführt wird.

Gemäß einer bevorzugten Ausgestaltung der Erfindung sind die Bordsegmente in Richtung zum Zahnriemenrad abgeschrägt. Dadurch wird sichergestellt, daß die Zahnriemen nicht im Betrieb auf ein Bordsegment auflaufen und abrutschen oder gar zerreißen, sondern vielmehr wieder auf das Zahnriemenrad zurückgeschoben werden.

Das erfindungsgemäße Zahnriemenrad mit Bord kann in vorteilhafter Weise als integrales Bauteil, beispielsweise als Spritzgußteil, ausgeführt sein. Alternativ kann das Bordsegment als separates Bauteil ausgeführt sein, daß an dem Zahnriemenrad montiert, beispielsweise an dessen Stirnseite angeschraubt wird, oder auf die Achse benachbart zum Zahnriemenrad aufgesteckt wird.

Die Erfindung wird nachfolgend beispielhaft unter Bezugnahme auf die begleitenden Zeichnungen erläutert, woraus sich weitere Vorteile und Aspekte der Erfindung ergeben.
- Fig.: 1 zeigt perspektivisch ein erfindungsgemäßes Zahnriemenrad mit integrierten Bordsegmenten;
- Fig. 2: zeigt eine Seitenansicht des Zahnriemenrads gemäß Fig. 1;
- Fig. 3: zeigt in Seitenansicht ein kaskadenartig angeordnetes Zahnriemenradsystem gemäß der Erfindung; und
- Fig. 4: zeigt in perspektivischer Darstellung ein kaskadenartig angeordnetes Zahnriemenradsystem gemäß der Erfindung.

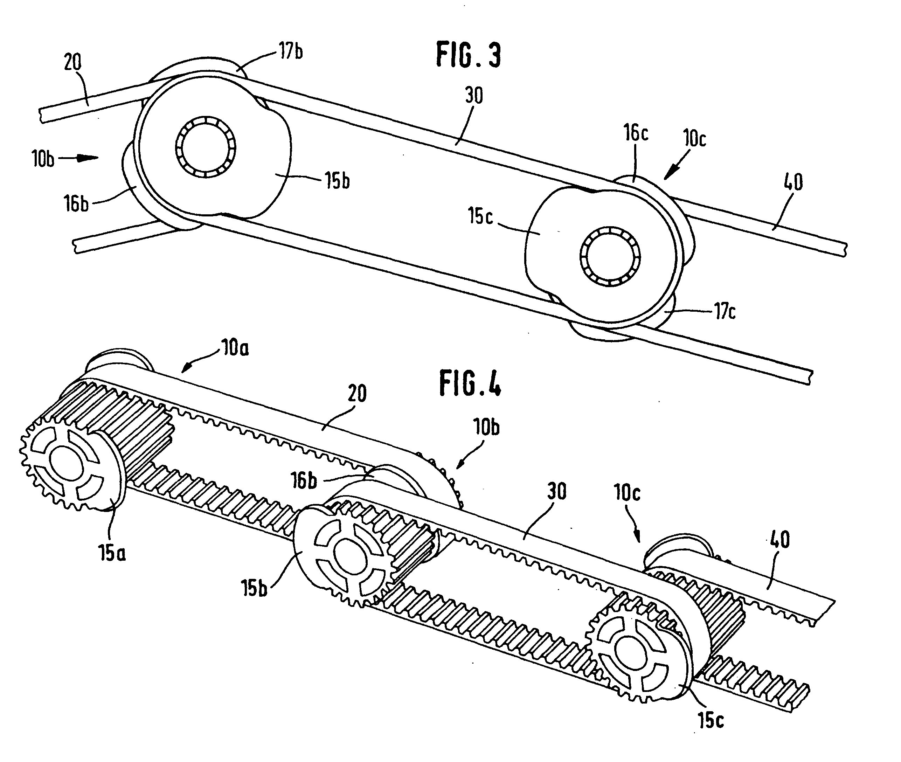

In Fig. 4 ist ein Zahnriemenradsystem mit drei Zahnriemenrädern 10a, 10b, 10c dargestellt, die kaskadenartig über Zahnriemen 20, 30, 40 miteinander gekoppelt sind, indem jeweils zwei Zahnriemenräder 15a, 15b bzw. 15b, 15c jeweils über einen gemeinsamen Zahnriemen 20 bzw. 30 angetrieben werden.

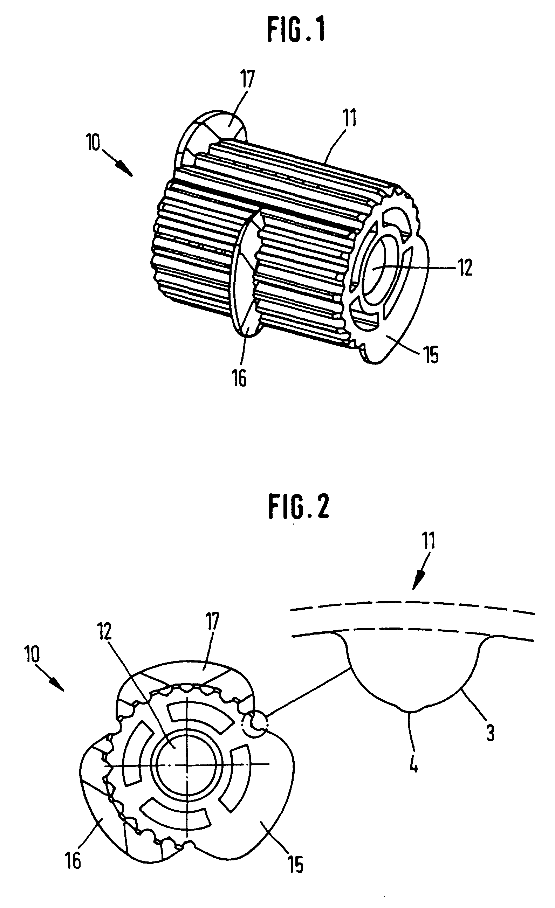

Ein den Zahnriemenrädern 10a bis 10c entsprechendes Zahnriemenrad 10 ist in Fig. 1 perspektivisch und in Fig. 2 in Seitenansicht dargestellt. Das Zahnriemenrad 10 besitzt eine verzahnte Umfangsfläche 11 und integral an das Zahnriemenrad 10 angeformte Bordsegmente 15,16,17 sowie eine zentrale Achsbohrung 12. Es kann in dieser Form im Spritzgußverfahren als integrales Bauteil hergestellt werden.

Die Bordsegmente 15 bis 17 erheben sich in radialer Richtung über die verzahnte Umfangsfläche 11 und verhindern ein seitliches Verschieben der auf dem Zahnriemenrad umlaufenden Zahnriemen. Die in den Fig.en dargestellten Zahnriemenräder 10 sind zum Umlauf von zwei Zahnriemen vorgesehen, wobei das mittlere Bordsegment 16 als Abstandhalter zwischen den Zahnriemen dient. Die äußeren Bordsegmente 15,17 haben die Funktion, ein Abrutschen des Zahnriemens von der verzahnten Umfangsfläche 11 während des Betriebs zu verhindern. Anstelle eines einzigen integralen Bauteils, wie in Fig.1 dargestellt, kann derselbe Zahnriemenradkomplex auch durch zwei separate Zahnriemenräder realisiert sein, die durch ein Bordsegment voneinander getrennt und mit jeweils einem weiteren Bordsegment seitlich bestückt sind.

Das in Fig. 2 vergößert dargestellte Detail des Zahnriemenrads 10 zeigt in einem Ausschnitt einen Bereich zwischen zwei Zähnen der verzahnten Umfangsfläche 11. Am Zahngrund 3 ist eine Nut 4 angebracht, welche zur Reduzierung der beim Betrieb des Zahnriemenrads 10 mit einem Zahnriemen entstehenden Geräusche dient. Die Reduzierung der Geräusche wird dadurch erreicht, daß komprimierte Luft über die Nuten 4 entweichen kann. Die komprimierte Luft entsteht während des Betriebs, wenn die Zähne des Zahnriemens und des Zahnriemenrads 10 ineinander greifen.

In dem in Fig. 1 dargestellten Falle eines Zahnriemenrads 10, das für zwei Zahnriemen vorgesehen ist und das deshalb drei Bordsegmente 15 bis 17 aufweist, sind die Bordsegmente über den Umfang um 120° zueinander beabstandet, wie in Fig. 2 veranschaulicht ist. Ein Grund dafür ist darin zu sehen, durch eine gleichmäßige Massenverteilung Unwuchten möglichst zu vermeiden. Dementsprechend ergibt sich ganz allgemein für ein Zahnriemenrad mit n Bordsegmenten eine Winkelbeabstandung der Bordsegmente von 360°/n über den Zahnriemenradumfang. Die Winkelbeabstandung ergibt sich auch aus der weiter unten beschriebenen einseitigen Montage hintereinander liegender Zahnriemen.

In Fig. 3 ist in Seitenansicht ein Zahnriemenradsystem mit kaskadenartiger Kopplung dargestellt. Das heißt, auf jeder Achse laufen zwei Zahnriemen 20, 30 bzw. 30, 40 und dementsprechend sind für jede Achse drei Bordsegmente 15b bis 17b bzw. 15c bis 17c vorhanden, die den Zahnriemenrädern 10b und 10c zugeordnet sind. Der Fußkreisdurchmesser ist für beide Zahnriemenräder 10b, 10c identisch, so daß Lasttrum und Leertrum des Zahnriemens 30 parallel zueinander verlaufen. Die Bordsegmente 15b und 15c erstrecken sich ausgehend vom Fußkreis des Zahnriemenrads 10 derart, daß sie zwischen Lasttrum und Leertrum des Zahnriemens 30 hindurchgeführt werden können. Das heißt, die Bordsegmente 15b und 15c erstrecken sich über etwas weniger als 180° des Fußkreises des Zahnriemenrads 10b bzw. 10c. In der in Fig. 3 dargestellten Ausführungsform umfaßt der Bereich, in dem der Zahnriemen 30 von keinem der Bordsegmente 15b und 15c seitlich geführt wird, lediglich etwa 2 bis 3°.

Die Montage des Zahnriemens 30 auf die Zahnriemenräder 10b und 10c gestaltet sich aufgrund der besonderen Ausbildung der Bordsegmente 15b, 15c sehr einfach. Bevor der Zahnriemen 30 auf die Zahnriemenräder 10b, 10c seitlich aufgeschoben wird, werden die Zahnriemenräder 10b,10c in die in Fig. 3 dargestellte Position gedreht, in der ihre äußeren Bordsegmente 15b, 15c aufeinander zuweisen, so daß die Bordsegmente zwischen Lasttrum und Leertrum des Zahnriemens 30 liegen. Ein Aufschieben des Zahnriemens 30 an den Bordsegmenten 15b, 15c vorbei ist dann ohne weiteres möglich. Im Betrieb, das heißt bei umlaufenden Zahnriemenrädern 10b,10c, wird der Zahnriemen nahezu kontinuierlich von den Bordsegmenten 15b, 15c seitlich geführt, abgesehen von einem vernachlässigbar geringen Bereich von etwa 2 bis 3°. Um ein Auflaufen des Zahnriemens 30 während dieser kurzen Zeitspanne auf die Bordsegmente 15b,15c zu verhindern, fallen die Innenflanken der Bordsegmente 15b, 15c zur verzahnten Umfangsfläche 11 ab (nicht dargestellt). Dadurch wird sichergestellt, daß der Zahnriemen 30, sollte er abrutschen, wieder auf das Zahnriemenrad zurückgeschoben wird.

In der Regel sind die Zahnriemenradsysteme nur einseitig zugänglich, so daß die Zahnriemen nacheinander, beginnend mit dem hintersten Zahnriemen auf die Zahnriemenräder geschoben werden. Dies wird nachfolgend anhand der Fig. 4 erläutert.

Als erstes werden die Zahnriemen 20 und 40 auf die Zahnriemenräder 10a, 10b sowie 1O aufgeschoben. Im Falle des Zahnriemens 40 erfolgt dies in einer Position des Zahnriemenrads 10c, wie sie in Fig. 4 dargestellt ist. Auch der Zahnriemen 20 wird zunächst auf die Zahnriemenräder 10a,10b in der Position aufgeschoben, in der die Zahnriemenräder 10a,10b in Fig. 4 dargestellt sind, das heißt mit nach innen bzw. aufeinander zugerichteten äußeren Bordsegmenten 15a,15b. Anschließend wird das Zahnriemenrad 10b um 120° entgegen dem Uhrzeigersinn gedreht, so daß nun das mittlere Bordsegment 16b nach innen weist. Gleichzeitig dreht sich das Zahnriemenrad 10a aufgrund der Zahnriemenradkopplung ebenfalls im Uhrzeigergegensinn, so daß das zugehörige mittlere Bordsegment 15b, das in der perspektivischen Darstellung gemäß Fig. 4 nicht sichtbar ist, ebenfalls nach innen weist und dem Bordsegment 16b gegenübersteht. In diesem Zustand kann der Zahnriemen 20 über die mittleren Bordsegmente 16a, 16b in die hintere Position, wie sie in Fig. 4 dargestellt ist, verschoben werden. Als letztes wird der Zahnriemen 30 montiert, indem die bisher nicht miteinander gekoppelten Zahnriemenräder 10b und 10c so verdreht werden, daß ihre äußeren Bordsegmente 15b, 15c einander zugewandt sind (wie in Fig. 3 gezeigt; gegenüber der in Fig. 4 dargestellten Position jeweils um 180° verdreht). Der Zahnriemen 30 kann dann problemlos aufgeschoben werden, wodurch das kaskadenartige Zahnriemenradsystem vervollständigt ist.

Neben dem dargestellten Zahnriemenrad für zwei Zahnriemen können Zahnriemenräder mit Bordsegmenten auch für einen oder mehr als zwei Zahnriemen ausgeführt werden. Wird das Zahnriemenrad für mehr aus zwei Zahnriemen verwendet, kann es für die Montage hilfreich sein, die Größe der Bordsegmente in Umfangsrichtung zu verringern.

Der aus Montagesicht hinterste Bord kann als vollständige Bordscheibe ausgefürht werden, da der Zahnriemen üblicherweise nicht über diese Position hinaus geschoben wird.

Die erfindungsgemäßen Zahnriemenräder können auch in Zahnradsystemen eingesetzt werden, in welchen ein Zahnriemen über mehr als zwei Zahnriemenräder geführt wird. Die Größe der Bordsegmente in Umfangsrichtung kann dann vergrößert werden.

## Patentansprüche

1. Zahnriemenrad (10) mit mindestens einem Bord (15, 16, 17), wobei das Zahnriemenrad (10) eine verzahnte Umfangsfläche (11) für den Eingriff eines oder mehrerer Zahnriemen (20, 30, 40) aufweist und der Bord in Umfangsrichtung des Zahnriemenrads (10) radial über die verzahnte Umfangsfläche (11) hinausragt, um ein Verrutschen des Zahnriemens (20, 30, 40) quer zur Umfangsrichtung des Zahnriemenrads (10) zu begrenzen, **dadurch gekennzeichnet, daß** mindestens ein Bord als Bordsegment (15,16,17) ausgeführt ist, wobei sich jedes Bord nur über einen begrenzten Teil des Zahnriemenradumfangs derart erstreckt, daß es beim Aufschieben eines der Zahnriemen (20, 30, 40) auf das Zahnriemenrad (10) nicht zur Kollision mit dem Bord kommt.

2. Zahnriemenrad nach Anspruch 1, **dadurch gekennzeichnet, daß** sich jedes Bord um weniger als 180° um den Zahnriemenradumfang erstreckt.

3. Zahnriemenrad nach Anspruch 1 oder 2, **dadurch gekennzeichnet, daß** das Bordsegment (15,16,17) in Richtung zur verzahnten Umfangsfläche (11) abfallend angeschrägt ist.

4. Zahnriemenrad nach einem der Ansprüche 1 bis 3, **dadurch gekennzeichnet, daß** mindestens zwei Bordsegmente (15,17) mit dazwischenliegender verzahnter Umfangsfläche (11) vorgesehen sind.

5. Zahnriemenrad nach einem der Ansprüche 1 bis 4, **dadurch gekennzeichnet, daß** mindestens drei Bordsegmente (15,16,17) mit dazwischenliegenden verzahnten Umfangsflächen (11) vorgesehen sind.

6. Zahnriemenrad nach Anspruch 5, **dadurch gekennzeichnet, daß** die Bordsegmente (15, 1 6, 17) um 120° in Umfangsrichtung zueinander versetzt angeordnet sind.

7. Zahnriemenrad nach einem der Ansprüche 1 bis 6, **dadurch gekennzeichnet, daß** das Zahnriemenrad (10) und das mindestens eine Bordsegment (15, 16,17) als integrales Bauteil ausgebildet sind.

8. Zahnriemenrad nach Anspruch 7, **dadurch gekennzeichnet, daß** das integrale Bauteil ein Spritzgußteil ist.

9. Zahnriemenrad nach einem der Ansprüche 1 bis 6, **dadurch gekennzeichnet, daß** das mindestens eine Bordsegment (15, 16, 17) als selbständiges Bauteil ausgebildet ist.

10. Zahnriemenrad nach einem der Ansprüche 1 bis 9, **dadurch gekennzeichnet, daß** jeweils am Zahngrund (3) des Zahnriemenrads (10) eine Vertiefung (4), insbesondere eine Nut, eingebracht ist.

11. Zahnriemenradsystem umfassend mindestens zwei Achsen mit jeweils mindestens einem Zahnriemenrad gemäß einem der Ansprüche 1 bis 9, wobei zwei Bordsegmente (15a,15b bzw. 15b, 15c) von über einen Zahnriemen (20 bzw. 30) miteinander gekoppelten Zahnriemenrädern (10a,10b bzw.10b, 10c) in einer bestimmten Achswinkelstellung einander derart zugewandt sind, daß ein Verschieben des Zahnriemens (20 bzw. 30) quer zur Umfangsrichtung der Zahnriemenräder (10a, 10b bzw. 10b, 10c) an den Segmenten (15a, 15b bzw. 15b, 15c) vorbei möglich ist.

12. Zahnriemenradsystem nach Anspruch 11, **dadurch gekennzeichnet, daß** auf einer Achse vier oder mehr Bordsegmente mit dazwischenliegenden verzahnten Umfangsflächen (11) angeordnet sind.

13. Zahnriemenradsystem nach Anspruch 11 oder 12, **dadurch gekennzeichnet, daß** ein Zahnriemen über drei oder mehr Zahnriemenräder geführt ist.

## Claims

1. A cog belt pulley (10) having at least one flange (15, 16, 17), the pulley (10) having a toothed circumferential surface (11) for engagement of one or more cog belts (20, 30, 40) and the flange protruding radially beyond the toothed circumferential surface (11) in the circumferential direction of the pulley (10) to limit slipping of the belt (20_{,} 30, 40) at right angles to the circumferential direction of the pulley (10), **characterized in that** at least one flange is designed as a flange segment (15, 16, 17), each flange extending only over a limited part of the pulley circumference such that when one of the belts (20, 30, 40) is pushed onto the pulley (10) there is no collision with the flange.

2. A cog belt pulley according to claim 1, **characterized in that** each flange extends over less than 180° of the pulley circumference.

3. A cog belt pulley according to claim 1 or 2, **characterized in that** the flange segment (15, 16, 17) is beveled to slope toward the toothed circumferential surface (11).

4. A cog belt pulley according to any of claims 1 to 3, **characterized in that** at least two flange segments (15, 17) with an intermediate toothed circumferential surface (11) are provided.

5. A cog belt pulley according to any of claims 1 to 4, **characterized in that** at least three flange segments (15, 16, 17} with an intermediate toothed circumferential surfaces (11) are provided.

6. A cog belt pulley according to claim 5, **characterized in that** the flange segments (15, 16, 17) are mutually offset by 120° in the circumferential direction.

7. A cog belt pulley according to any of claims 1 to 6, **characterized in that** the cog belt pulley (10) and the at least one flange segment (15, 16, 17) are formed as an integral component.

8. A cog belt pulley according to claim 7, **characterized in that** the integral component is an injection molded part.

9. A cog belt pulley according to any of claims I to 6, **characterized in that** the at least one flange segment (15, 16, 17) is formed as an independent component.

10. A cog belt pulley according to any of claims 1 to 9, **characterized in that** a depression (4), in particular a groove, is formed at the base (3) of each tooth of the cog belt pulley (10).

11. A cog belt pulley system comprising at least two axles each with at least one cog belt pulley according to any of claims 1 to 9, whereby two flange segments (15a, 15b or 15b, 15c) of pulleys (10a, 10b or 10b, 10c) coupled via a cog belt (20 or 30) face each other in a certain axle angle position such that the belt (20 or 30) can be pushed past the segments (15a, 15b or 15b, 15c) at right angles to the circumferential direction of the pulleys (10a, 10b or 10b, 10c).

12. A cog belt pulley system according to claim 11, **characterized in that** four or more flange segments with intermediate toothed circumferential surfaces (11) are disposed on one axle.

13. A cog belt pulley system according to claim 11 or 12, **characterized in that** one belt is guided over three or more pulleys.

## Revendications

1. Poulie dentée (10) comprenant au moins une bordure (15, 16, 17), la poulie dentée (10) comportant une surface périphérique dentée (11) destinée à engrener avec une ou plusieurs courroies (20, 30, 40) dentée ou crantée et la bordure faisant saillie dans la direction de la périphérie de la poulie dentée (10) radialement au-delà de la surface périphérique dentée (11), afin de limiter le glissement de la poulie dentée (20, 30, 40) transversalement à la direction périphérique de la poulie dentée (10), **caractérisée en ce qu'**au moins une bordure est réalisée sous la forme de segments de bordure (15,16, 17), chaque bordure s'étendant seulement sur une partie limitée de la périphérie de la poulie dentée, de sorte qu'en cas de coulissement de l'une des courroies crantées (20, 30, 40) sur la poulie dentée (10), elle ne vienne pas en collision avec la bordure.

2. Poulie dentée selon la revendication 1 **caractérisée en ce que** chaque bordure s'étend sur la périphérie de la poulie dentée sur une longueur inférieure à 180° d'angle.

3. Poulie dentée selon la revendication 1 ou 2, **caractérisée en ce que** le segment (15, 16, 17) de bordure est incliné en descendant en direction de la surface périphérique dentée (11).

4. Poulie dentée selon l'une des revendications 1 à 3 **caractérisée en ce que** sont prévus au moins deux segments (15, 17), de bordure avec des surfaces périphériques dentées (11) disposés entre eux.

5. Poulie dentée selon l'une des revendications 1 à 4, **caractérisée en ce que** sont prévus au moins trois segments (15, 16, 17) de bordure avec des surfaces périphériques dentées (11) disposés entre eux.

6. Poulie dentée selon la revendication 5, **caractérisée en ce que** les segments (15, 16, 17) de bordure sont disposés décalés à 120° l'un par rapport à l'autre.

7. Poulie dentée selon l'une des revendications 1 à 6, **caractérisée en ce que** la poulie dentée (10) et le au moins un segment (15, 16, 17) de bordure sont réalisés comme un composant monobloc.

8. Poulie dentée selon la revendication 7, **caractérisée en ce que** le composant monobloc est une pièce moulée par injection.

9. Poulie dentée selon l'une des revendications 1 à 10, **caractérisée en ce que** le au moins un segment (15, 16, 17) de bordure est réalisé comme un composant indépendant.

10. Poulie dentée selon l'une des revendications 1 à 9, **caractérisée en ce qu'**à chaque fond de dent (3) de la poulie dentée (10), est réalisée une creusure (4), en particulier une rainure.

11. Système de poulie dentée comprenant au moins deux axes munis chacun d'au moins une poulie dentée selon une des revendications 1 à 9, dans lequel système deux segments (15a, 15b, ou 15b, 15c) de bordure de poulie dentée (10a, 10b ou 10b, 10c) couplés les unes aux autres par une courroie crantée (20 ou 30), sont disposées l'une par rapport à l'autre selon une position angulaire déterminée, de sorte qu'un glissement de poulie dentée (20 ou 30), sont disposées l'une par rapport à l'autre selon une position angulaire déterminée, de sorte qu'un glissement de la poulie dentée (20 ou 30) transversalement à la direction périphérique des poulies dentées (10a, 10b ou 10b, 10c) soit possible sur les segments (15a, 15b ou 15b, 15c).

12. Système de poulie dentée selon la revendication 11, **caractérisé en ce que** sont disposés sur un axe au moins quatre segments de bordure avec des surfaces périphériques (11) disposées entre les segments.

13. Système de poulies dentées selon la revendication 11 ou 12, **caractérisé en ce qu'**une poulie dentée est guidée sur au moins trois poulies dentées.
